# EUROPEAN PATENT APPLICATION

(11) **EP 1 892 972 A1**
(43) Date of publication of application: **27.02.2008**
(21) Application number: 06460029.9
(22) Date of filing: 21.08.2006
(51) Int. Cl.: H04Q 7/36, H04Q 7/38

(54) **Method and system for interference mitigation in a mobile communications system**

(71) Applicant: Nokia Siemens Networks GmbH & Co. KG, 81541 München (DE)
(72) Inventor: Chmiel, Mieszko, 48-340 Glucholazy (PL)

(57) **Abstract**

The present invention provides a method and system for inter-cell interference coordination during random access in a mobile communications system with at least one serving cell and at least one user equipment. The method comprises the following steps: In a first step, the user equipment executes downlink measurements. In a second step, an interference mitigation algorithm is executed using results of said downlink measurements as input for assigning time/frequency resources for said random access of said user equipment. In a third step, said time/frequency resources for said random access of said user equipment are assigned.

## Description

The present invention relates to a method and system for interference mitigation in a mobile communications system.

A mobile communications system, particularly a wireless cellular system, is organised in form of neighbouring cells with each cell being served by a base station. The base station provides communication facilities to and from mobile subscribers.

Enhanced UTRA (E-UTRA) is the long term evolution (LTE) of the Universal Mobile Telecommunications System (UMTS) currently standardised in the 3rd Generation Partnership Project (3GPP). Orthogonal Frequency Division Multiple Access (OFDMA) and Single Carrier Frequency Division Multiple Access (SC-FDMA, also known as Discrete Fourier Transform Spread OFDMA, DFT-SOFDMA) are considered for the downlink (DL) and uplink (UL) air interface respectively. An access scheme like SC-FDMA/OFDMA in contrast to Wideband Code Division Multiple Access (WCDMA) offers the advantage of intra-cell orthogonality with respect to time and frequency multiplexing. This means that even for frequency reuse 1 (single frequency network), users of the cell of interest do not interfere each other, because they are time and/or frequency multiplexed. However, such a system may suffer from inter-cell interference since the time/frequency resources are not orthogonal between cells if the system uses one carrier frequency.

In a wireless cellular system, a terminal (User Equipment, UE), when making initial access or when re-establishing a connection after an inactivity period, may be neither time-synchronised at the base station nor power-controlled by the base station. Therefore, the receive power of non-synchronized random access bursts may be too high or too low comparing to the receive power required for a desired detection probability.

In E-UTRA, random access bursts may be intra-cell orthogonal (to scheduled data transmission) e.g. by reserving exclusive uplink Time Division Multiplex (TDM) / Frequency Division Multiplexing (FDM) resources, but the bursts may interfere with uplink transmissions of users using the same physical resources in neighbouring cells. The interference level may be high, because the transmit power of random access bursts can not be accurately controlled, or because of aggressive transmit power control algorithms used to reduce the system access delay (e.g. transmission with the maximum output power or power ramping, i.e. stepping up the transmission power after each unsuccessful access).

It is an aim of embodiments of the invention to address at the problem discussed above concerning interference during the random access procedure in a mobile communications system.

Said problem is solved by the features mentioned in the independent claims. Preferred embodiments of the invention are described in the dependant claims.

The present invention provides a method and system for inter-cell interference coordination during random access in a mobile communications system with at least one serving cell and at least one user equipment. The method comprises of the following steps: In a first step, the user equipment executes downlink measurements. In a second step, an interference mitigation algorithm is executed using results of said downlink measurements as input for assigning time/frequency resources for said random access of said user equipment. In a third step, said time/frequency resources for said random access of said user equipment are assigned.

The proposed invention provides the advantage that inter-cell interference during the random access procedure in E-UTRA is reduced. This decreases the throughput degradation in a communications system caused by random access as well as UE battery consumption and overall access time.

Preferred embodiments of the present invention will now be described with reference to the accompanying drawing in which:
Figure 1: shows components of a mobile communications system
Figure 2: shows a flowchart depicting the proposed method
Figure 3: shows an example of interference coordination for random access

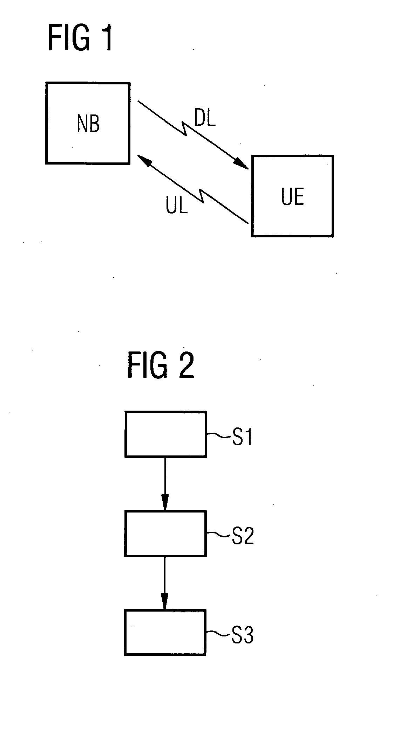

Figure 1 shows components of a mobile communications system comprising of a base station NB and a user equipment UE. The invention proposes to execute measurements concerning a downlink channel DL, used by said base station NB to transmit information. Said downlink measurements are then used to assign time/frequency resources in uplink UL direction for random access of said user equipment.

Figure 2 shows a flowchart depicting the proposed method. Since neither reports by the user equipment UE nor measurements or control by the base station NB are possible to avoid inter-cell interference due to a user equipment's UE initial random access or access after an inactivity period, the following open loop method of applying interference coordination for the random access channel is proposed:

In a first step S1, the user equipment UE estimates its uplink UL path loss and uplink UL interference conditions based on downlink DL measurements. These estimates are used as an input for an uplink interference mitigation algorithm. Said downlink DL measurements used for the estimation comprise at least one of the following measurements:
- path loss (including shadowing) to the serving cell c1 and/or path losses (including shadowing) to non-serving neighbouring cells c2, c3, said path loss measurements e.g. based on
   o the receive power of the downlink DL reference signal (pilot channel) or broadcast channel, or
   o the value of the transmit power of the downlink DL reference signal/broadcast channel broadcasted by the measured cell in the broadcast channel of that cell
- received power of the serving cell c1
- received powers of neighbouring cells c2, c3
- downlink DL geometry, said downlink DL geometry representing the ratio between said received power of the serving cell c1 and the total receive power of non-serving cells c2, c3
- quality of the receive signal of the serving cell c1 (Channel Quality Indicator, CQI)
- qualities of the received signals of the non-serving cells c2, c3

In a second step S2, said interference mitigation algorithm uses the result of said quality measurements as input. The mapping between the measurement results and the resulting user equipment UE action, i.e. the mapping between the measured downlink DL channel quality and resources to be used for random access by the user equipment UE, can be configured statically at the user equipment UE, or the mapping can be derived from the cell ID using a lookup table at the user equipment UE, or the mapping can be broadcasted by serving cell c1 in the broadcast channel (BCH), e.g. by the base station NB. Particularly, the result of said interference mitigation algorithm can include:
- transmission on specific random access time/frequency resources (e.g. cell-edge ce or cell-centre cc resources depending on the UE decision if it is a cell-edge or cell-centre user, or selection of resources depending on the path loss)
- transmission with a specific transmit power: E.g. different power used on cell-edge ce resources and on the cell-centre cc resources, or different power depending only on the path loss including shadowing, whereby an algorithm to select the transmit power can optionally incorporate open loop power control. Examples are the interference mitigation algorithm allowing to transmit with a maximum or a high user equipment UE power, or to use 'aggressive' open loop power control by e.g. adding a positive offset to the transmit power calculated. Other options are cell-centre user equipments UE using the maximum power and cell-edge users using open loop power control, or using a higher step size in a power ramping algorithm.
- transmission with a specific transmission bandwidth
- transmission with a specific duration of the transmission
- transmission with a specific code/sequence

In a third step S3, finally, said time/frequency resources for said random access of said user equipment UE are assigned.

Said mapping being derived from the cell ID is e.g. done by the user equipment UE using a lookup table. In one embodiment, 512 cell IDs are used in the communications system together with a static uplink interference co-ordination scheme planned with frequency reuse 3. I.e., every third cell uses the same resource restriction, thereby forming three cell groups. The user equipment UE classifies itself on the basis of said measurements. The actually used restriction in the cell is derived from the cell ID and the lookup table by applying a predefined function, e.g. a modulo function: If cell ID modulo 3 (for frequency reuse of 3) is 0, this means that the considered cell belongs to cell group A. If cell ID modulo 3 = 1 this means cell group B, and if cell ID modulo 3 = 2 this means cell group C. This example can easily be generalized for a scheme with any reuse factor.

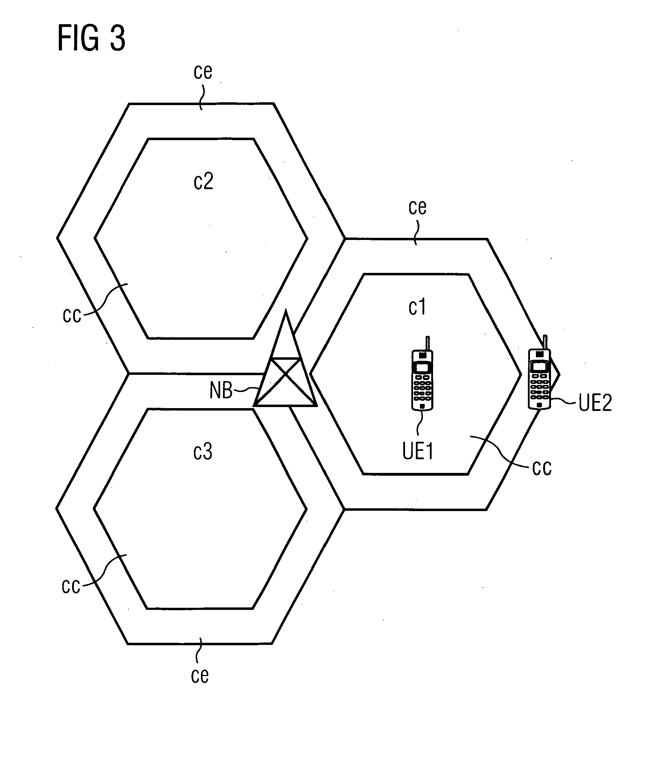

Figure 3 shows an embodiment with an example of interference coordination for random access of a user equipment UE in a cellular system with three cells c1, c2, c3, a base station NB and two user equipments UE1, UE2. Each cell c1, c2, c3 has a cell edge ce with cell-edge random access resources and a cell centre cc with cell-centre random access resources. In this embodiment, it is assumed that uplink random access cell edge/-centre resource selection is based on a measured downlink geometry, which is the ratio between receive power of the serving cell c1 and the total receive power of non-serving cells c2, c3.

In the scenario shown in figure 3, a first user equipment UE1 being located in the cell centre cc of the serving cell c1 measures a high downlink geometry and therefore uses cell-centre random access resources for its uplink random access. For a second user equipment UE2 being located in the cell edge ce, the measured downlink geometry is low, and therefore the second user equipment UE2 uses cell-edge random access resources. Said cell-centre resources and said cell-edge resources are specifically chosen to reduce inter-cell interferences depending on the location of the user equipment.

The invention has at least the following advantages:
Signal to Interference-plus-Noise Ratio (SINR) of cell-edge ce (and cell-centre cc) users during random access is improved, which increases the detection probability as well as the coverage of random access bursts. Therefore, more information bits can be included in the burst and the procedure can be faster.

Furthermore, inter-cell interference due to random access bursts is reduced; moreover, this reduction allows a more 'aggressive' operating point of random access power control, and as a result the access time is reduced. This delay is one of the fundamental E-UTRA requirements.

Additionally, inter-cell interference coordination for random access does not deteriorate waveform properties of random access signature sequences. Moreover, this scheme can be applied in spite of lack of time synchronisation of random access bursts.

This method can be applied for various variants of inter-cell interference coordination.

## Claims

1. A method for inter-cell interference coordination during random access in a mobile communications system with at least one serving cell (c1) and at least one user equipment (UE), the method comprising the steps of:
- in a first step (S1), the user equipment (UE) executing downlink (DL) measurements;
- in a second step (S2), executing an interference mitigation algorithm using results of said downlink (DL) measurements as input for assigning time/frequency resources (UL) for said random access of said user equipment (UE);
- in a third step (S3), assigning time/frequency resources for said random access of said user equipment (UE).

2. The method in claim 1, wherein said interference mitigation algorithm executes a mapping between said results of said downlink (DL) measurements and said time/frequency resources (UL) to be assigned.

3. The method as claimed in any of the preceding claims, wherein said mapping is being signalled on a broadcast channel in said at least one serving cell (c1).

4. The method as claimed in claim 2, wherein said mapping is statically predefined in said user equipment (UE).

5. The method as claimed in claim 2, wherein said mapping is derived by said user equipment (UE) from a cell ID identifying said serving cell (c1) based on a lookup-table stored in said user equipment (UE) and a predefined function.

6. The method as claimed in any of the preceding claims, wherein said downlink (DL) measurements comprise at least one of the following measurements:
- path loss, including shadowing, to the serving cell (c1) and/or path losses, including shadowing, to at least one non-serving neighbouring cell (c2, c3),
- received power of said serving cell (c1),
- received powers of neighbouring cells (c2, c3),
- downlink (DL) geometry, said downlink (DL) geometry representing a ratio between said received power of said serving cell (c1) and a total receive power of said at least one non-serving neighbouring cell (c2, c3),
- quality of a receive signal of said serving cell (c1),
- qualities of the received signals of said at least one non-serving neighbouring cell (c2, c3).

7. The method in claim 6, wherein said path loss measurements are based on
- a receive power of a downlink (DL) reference signal or said broadcast channel of a cell (c1, c2, c3), and
- a value of a transmit power of said downlink (DL) reference signal or said broadcast channel broadcasted by said cell (c1, c2, c3) in said broadcast channel of said cell (c1, c2, c3)

8. The method as claimed in any of the preceding claims, wherein said assigning time/frequency resources (UL) by said interference mitigation algorithm further comprises one of the following steps:
- assigning a specific transmit power,
- assigning a specific bandwidth,
- assigning a specific transmission duration,
- assigning a specific code and/or sequence.

9. The method as claimed in any of the preceding claims, wherein said interference mitigation algorithm considers said user equipment's (UE) location for assigning said time/frequency resources (UL), particularly assigning cell-edge (ce) or cell-centre (cc) resources depending on said user equipment (UE) being located at a cell edge (ce) or at a cell-centre (cc).

10. Base station (NB) with means for
- transmitting a mapping between results of downlink (DL) measurements of a user equipment (UE) and time/frequency resources (UL) to be assigned for random access of said user equipment (UE), and
- receiving random access signals of said user equipment (UE), said random access signals transmitted on said time/frequency resources (UL) and said time/frequency resources (UL) assigned by an interference mitigation algorithm, said interference mitigation algorithm using at least said results of downlink (DL) measurements of said user equipment (UE) as input.

11. User equipment (UE) with means for
- executing downlink (DL) measurements during random access, and
- executing an interference mitigation algorithm using results of said downlink (DL) measurements as input for assigning time/frequency resources (UL) for said random access of said user equipment (UE); and
- assigning time/frequency resources for said random access of said user equipment (UE).

12. Communications system with at least one base station according to claim 10 and at least one user equipment (UE) according to claim 11.
